# EUROPÄISCHE PATENTSCHRIFT

(11) **EP 2 642 731 B1**
(45) Veröffentlichungstag und Bekanntmachung des Hinweises auf die Patenterteilung: **22.05.2019**
(21) Anmeldenummer: 12189229.3
(22) Anmeldetag: 19.10.2012
(51) Int. Cl.: H04M 1/725

(54) **tragbare DECT-Basiseinheit**
portable DECT base unit
Unité de base DECT portable

(30) Priorität: 19.10.2011 DE 102011054627
(43) Veröffentlichungstag der Anmeldung: 25.09.2013
(73) Patentinhaber: Gigaset Communications GmbH, 40549 Düsseldorf (DE)
(72) Erfinder: Ord, Nicholas, 81337 München (DE); Kamperschroer, Erich, 46499 Hamminkeln (DE)
(74) Vertreter: Michalski Hüttermann & Partner Patentanwälte mbB

(56) Entgegenhaltungen:
- EP-A1- 0 643 518
- Huawei Technologies Co. ET AL: "HUAWEI MC850/MC851 Media Phone, User Guide", , 10. Februar 2010 (2010-02-10), XP055075446, Gefunden im Internet: URL:http://support.huawei.com/enterprise/d ocinforeader.action?contentId=DOC010043870 5&idPath=|7881490|7275752|7275868|71556 [gefunden am 2013-08-16]
- Kan: "HUAWEI MC850 dostepny w Polsce", , 11. März 2011 (2011-03-11), XP055075462, Gefunden im Internet: URL:http://www.telix.pl/artykul/huawei-mc8 50-dostepny-w-polsce-3,40284.html [gefunden am 2013-08-16]
- GLOGER M: "DRAHTLOS AUF DRAHT HOME-LAN UND INTERNET-ZUGANG AUF DMAP-BASIS", NET - ZEITSCHRIFT FUER KOMMUNIKATIONSMANAGEMENT, N E T VERLAGSSERVICE GMBH, DE, Bd. 55, Nr. 7/08, 1. Januar 2001 (2001-01-01), Seiten 23-26, XP001107656, ISSN: 0947-4765
- Telstra Corporation Limited: "Telstra T-Touch Tab (TM) User Guide", , 3. November 2010 (2010-11-03), XP55075480, Gefunden im Internet: URL:http://www.google.de/url?sa=t&rct=j&q= &esrc=s&source=web&cd=1&cad=rja&ved=0CC0QF jAA&url=http%3A%2F%2Fwww.cellphones.ca%2Fu pload%2Fmanuals%2Ftelstra-t-touch-tab-manu al.pdf&ei=N-wNUv6wEYjJsgaRt4CYCg&usg=AFQjC NFpB9-B6xcvzo_qMKkM2b7v-TgHQg&bvm=bv.50768 961,d.Yms [gefunden am 2013-08-16]
- Jan Rähm: "FRITZ!Box als DECT-Repeater: Mehr Reichweite fürs FRITZ!Fon - teltarif.de News", , 18 May 2011 (2011-05-18), XP055244561, Retrieved from the Internet: URL:http://www.teltarif.de/mehr-reichweite -fritzbox-als-dect-repeater/news/42709.htm l [retrieved on 2016-01-25]

## Beschreibung

Die vorliegende Erfindung betrifft eine Basiseinheit mit einem DECT-Modul für die Verbindung wenigstens eines Mobilteils nach dem DECT-Standard, wobei die Basiseinheit einen Telekommunikationsanschluss zur Verbindung mit einem Telekommunikationsdienstleister umfasst, um eine Telekommunikationsverbindung zwischen dem Mobilteil und einer Gegenstelle aufzubauen. Weiterhin betrifft die vorliegende Erfindung eine Telefonanlage mit einer Basiseinheit und wenigstens einem Mobilteil nach dem DECT-Standard.

Telefonanlagen nach dem DECT-Standard werden üblicherweise im häuslichen Bereich oder in Firmen verwendet und umfassen eine Basiseinheit und wenigstens ein Mobilteil. Eine Position der Basiseinheit wird üblicherweise durch die Position einer Anschlussdose bestimmt, an welche die Basiseinheit mittels eines Kabels angeschlossen wird.

Die Telefonanalagen werden verwendet, um Telekommunikationsverbindungen über mit der Basiseinheit verbundene Telekommunikationsdienstleister von oder zu dem Mobilteilen schnurlos aufzubauen. Außerdem wird eine der Aufbau einer Telekommunikationsverbindung zwischen verschiedenen Mobilteilen unterstützt. Basiseinheiten und Mobilteile nach dem DECT-Standard sind für Telekommunikationsanwendungen optimiert und weisen eine hohe Akzeptanz auf gegenüber anderen Geräten, die beispielsweise im frei verfügbaren ISM-Band nach dem Bluetooth- oder WLAN-Standard kommunizieren. Solche DECT-Geräte besitzen gegenüber Geräten nach dem Bluetooth- oder WLAN-Standard eine große Reichweite, weshalb sie eine Kommunikation mit einer großen räumlichen Freiheit und Flexibilität ermöglichen. Dabei zeichnen sich die DECT-Geräte durch eine gute Sprachqualität aus. Auch ermöglichen Mobilteile nach dem DECT-Standard eine lange Bereitschaftszeit und Nutzungsdauer bei bestehender Telekommunikationsverbindung.

Die Basiseinheit ist über den Telekommunikationsanschluss mit einem Telekommunikationsdienstleister verbindbar, um die Telekommunikationsverbindung zu einer Gegenstelle aufzubauen. Als Telekommunikationsdienstleister ist dabei ein Anbieter von Telekommunikationsdienstleistungen zu verstehen, also eine Anbieter für den Aufbau von Telekommunikationsverbindungen. Für Festnetzverbindungen wird dabei praktisch kaum wahrgenommen, welcher Telekommunikationsdienstleister die Dienstleistungen anbietet, da eine Konfiguration des Telekommunikationsanschlusses sowie des Telekommunikationsdienstleisters über das bloße Einstecken eines Telefons in eine Telefonanschlussdose geschieht und die Telefonanschlussdose einem Telekommunikationsdienstleister fest zugeordnet ist. Prinzipiell besteht jedoch auch hier die Möglichkeit, durch die Verwendung eines Präfixes einen bestimmten Telekommunikationsdienstleister explizit auszuwählen, was auch als call-by-call bekannt ist. Beim Aufbau von Telekommunikationsverbindungen über IP-Netze, auch bekannt als Voice-over-IP (VoIP), ist jedoch eine explizite Auswahl des Telekommunikationsdienstleister erforderlich, was oft eine Anmeldung mit einer Identifikation für den Telekommunikationsdienstleister und einem Passwort beinhaltet.

Es sind verschiedene Arten von Telekommunikationsanschlüssen für die Verbindung mit den Telekommunikationsdienstleistern und den Aufbau einer Telekommunikationsverbindung über einen Telekommunikationsdienstleister bekannt. Beispielsweise können Telekommunikationsverbindungen über ein Festnetz, auch bekannt als Public Switched Telephone Network (PSTN), oder über eine Datenverbindung, die unter Bezug auf das Internet Protocol auch als IP-Verbindung bezeichnet wird, als Voice-over-IP-Verbindung aufgebaut werden. Neben Sprachverbindungen können die Telekommunikationsverbindungen auch nachrichtenbasiert sein, beispielsweise nach der Art eines Messaging-Dienstes.

Somit stehen vielfältige Möglichkeiten für den Aufbau der Telekommunikationsverbindung zur Verfügung. Auch sind Zusatzdienste nutzbar, indem beispielsweise Daten aus dem Internet an ein Mobilteil übertragen werden. Diese vielfältigen Nutzungsmöglichkeiten stellen hohe Anforderungen an die Bedienung über das Mobilteil. In der Praxis hat sich jedoch herausgestellt, dass eine große Anzahl von Nutzern mit dem Aufbau einer Konferenz mit einer Mehrzahl Gegenstellen oder einer Übergabe bzw. Weiterverbindung einer Telekommunikationsverbindung überfordert sind. Telefongeräte allgemein und insbesondere Mobilteile nach dem DECT-Standard sind für eine Sprachkommunikation unter halten des Telefongeräts am Kopf optimiert. Daher sind Mobilteile überwiegend klein und leicht ausgeführt, so dass sie ermüdungsfrei während einer bestehenden Telekommunikationsverbindung gehalten werden können. Entsprechend weisen die Mobilteile ein kleines Display und eingeschränkte Bedienmöglichkeiten, beispielsweise über Bedienknöpfe, auf. Funktionen des Mobilteils, die eine Bedienung durch einen Nutzer erfordern, sind daher mühsam durchzuführen. Gleichermaßen wird dadurch die Nutzung von Internetanwendungen, die meist eine intensive Bedienung an dem Mobilteil erfordern, erschwert.

Auch die Pflege von Kontakten auf verschiedenen Mobilteilen ist mühsam, da die Kontakte auf jedem Mobilteil separat verwaltet werden. Selbst bei einer Synchronisation der Kontakte über eine Datenverarbeitungseinrichtung, beispielsweise einem PC, ist es erforderlich, die Kontakte separat auf jedem Mobilteil zu synchronisieren.

Aus der Dokumentation zum Gerät HUAWEI MC850/MC851 Media Phone von Huawei Technologies Co. ist es bekannt, dass eine Basiseinheit eines DECT-Geräts mit einer Benutzerschnittstelle in Form eines "Home Screen" versehen ist, um ein Management von Telekommunikationsverbindungen durchzuführen. Außerdem ist es aus Jan Rähm: "FRITZ!Box als DECT-Repeater: Mehr Reichweite fürs FRITZ!Fon - teltarif.de News" bekannt, eine DECT-Basisstation mit einer anderen DECT-Basisstation in einem sogenannten Repeater-Modus zu koppeln, um die Reichweite einer drahtlosen Telefonanlage zu vergrößern.

Ausgehend von dem oben genannten Stand der Technik liegt der Erfindung somit die Aufgabe zugrunde, eine Basiseinheit und eine Telefonanlage anzugeben, die den Aufbau und das Management von Telekommunikationsverbindungen erleichtert.

Die Lösung der Aufgabe erfolgt erfindungsgemäß durch die Merkmale der unabhängigen Ansprüche. Vorteilhafte Ausgestaltungen der Erfindung sind in den Unteransprüchen angegeben.

Erfindungsgemäß ist somit eine Basiseinheit mit einem DECT-Modul für die Verbindung wenigstens eines Mobilteils nach dem DECT-Standard vorgesehen, wobei die Basiseinheit einen Telekommunikationsanschluss zur Verbindung mit einem Telekommunikationsdienstleister umfasst, um eine Telekommunikationsverbindung zwischen dem Mobilteil und einer Gegenstelle aufzubauen, wobei die Basiseinheit eine Benutzerschnittstelle umfasst und ausgeführt ist, ein Management der Telekommunikationsverbindung durchzuführen.

Erfindungsgemäß ist weiterhin eine Telefonanlage mit einer Basiseinheit und wenigstens einem Mobilteil nach dem DECT-Standard vorgesehen, wobei die Basiseinheit wie oben beschrieben ausgeführt ist.

Grundidee der vorliegenden Erfindung ist es also, die Basiseinheit mit einer Benutzerschnittstelle auszuführen, die ein Management der Telekommunikationsverbindung ermöglicht. Es erfolgt somit in der Telefonanalage eine Trennung von Sprachfunktionen und Managementfunktionen für die Telekommunikationsverbindung, wobei die Sprachfunktionen dem Mobilteil zugeordnet sind, und die Managementfunktionen der Basiseinheit. Somit kann das Mobilteil als Spracheinheit auf die Übertragung der Sprache ausgerichtet und entsprechend optimiert sein, wodurch die Spracheinheit vergleichsweise einfach ausgeführt sein kann, da sie nur weniger Funktionen bereitstellen muss. Dies ermöglicht es, das Mobilteil leicht und klein auszuführen, da keine aufwändige Benutzerschnittstelle an dem Mobilteil erforderlich ist. Entsprechend werden die Produktionskosten für Mobilteile reduziert. Auch ist die Verwendung von Mobilteilen möglich, die praktisch fast keine Benutzerschnittstelle aufweisen, und durch ihr daraus resultierendes geringes Gewicht und die geringe Größe am Körper oder an der Kleidung getragen werden können, ohne dass sie von dem Nutzer als störend wahrgenommen werden. Das Management der Telekommunikationsverbindung umfasst einen Aufbau der Telekommunikationsverbindung, der ebenfalls von der Basiseinheit aus für das Mobilteil initiiert werden kann. Die Basiseinheit selbst wird dabei nicht zur Kommunikation mit der Gegenstelle verwendet. Das Management der Telekommunikationsverbindung umfasst weiterhin Funktionen wie den Aufbau einer Konferenz mit mehreren Teilnehmern, eine Übergabe einer bestehenden Telekommunikationsverbindung an eine andere Gegenstelle oder ähnliches. Die Benutzerschnittstelle kann beliebig ausgeführt sein, um das Management der Telekommunikationsverbindung zu ermöglichen. Benutzerschnittstellen für die Basiseinheit können Bedienknöpfe oder auch ein Web-Interface umfassen, wenn die Basiseinheit beispielsweise als DSL-Modem mit integriertem Router und integrierter DECT-Basiseinheit ausgeführt ist. Das Management der Telekommunikationsverbindung ist auch nach deren Aufbau leicht möglich, ohne dass ein Gespräch bzw. ein Person, die das Mobilteil an ihr Ohr hält, eingeschränkt wird. Für das Management der Telekommunikationsverbindung ist es nicht mehr erforderlich, das Mobilteil von dem Kopf zu entfernen und in einer Position zu halten, in der es zum Management der Telekommunikationsverbindung bedient werden kann. Die Basiseinheit kann jederzeit beliebig gehalten und bedient werden, da sie während einer bestehenden Telekommunikationsverbindung nicht die für Sprachfunktionen benötigt wird. Performance-Anforderungen, die für das Management der Telekommunikationsverbindung oder die Nutzung bestimmter Dienste gelten, müssen nur einmal in der Basiseinheit erfüllt werden, was die Herstellung und Verwendung von besonders kostengünstigen Mobilteilen ermöglicht. Bei der Telefonanlage können somit Mobilteile mit geringen Zusatzkosten hinzugefügt werden, so dass Telefonanlagen kostengünstig bereitgestellt werden können. Durch die Benutzerschnittstelle können auch Kontakte in einer Kontaktliste einfach in der Basiseinheit verwaltet werden.

In vorteilhafter Ausgestaltung der Erfindung ist die Benutzerschnittstelle als grafische Benutzerschnittstelle mit einer Anzeigeeinheit ausgeführt ist, wobei die Anzeigeeinheit als Touchscreen ausgeführt ist. Die Verwendung eines Touchscreens ermöglicht ein einfaches Management der Telekommunikationsverbindung, beispielsweise indem Managementfunktionen durch ein einfaches Verschieben eines grafisch angezeigten Mobilteils zu angezeigten Funktionen realisiert werden können.

Erfindungsgemäß umfasst die Basiseinheit einen Telekommunikationsanschluss nach dem DECT-Standard zum Anschluss an eine DECT-Basis als Mobilteil. Somit kann eine vollständige Telefonanlage als Mobilteil an eine DECT-Basis angeschlossen werden. Die Basiseinheit zum Management der Telekommunikationsverbindung wird dadurch unabhängig von einem durch eine Anschlussdose vorgegebenen Standort der DECT-Basis. Es ergibt sich, dass die Reichweiten der Basis und der Basiseinheit zueinander addiert werden können, abhängig von der Positionierung der DECT-Basis und der Basiseinheit. Ein Verwendungsbereich für die Mobilteile wird um die Basiseinheit herum definiert und ist somit unabhängig von der DECT-Basis. Praktisch kann dadurch eine Vergrößerung des Aktionsradius von Mobilteilen erreicht werden. Eine vorhandene Installation der DECT-Basis kann beibehalten werden, wodurch sich ein geringer Installationsaufwand für die Telefonanlage und die Basiseinheit ergibt. So wird die Akzeptanz durch einen Nutzer erhöht und Installationskosten reduziert.

In bevorzugter Ausgestaltung der Erfindung umfasst der Telekommunikationsanschluss eine Datenkommunikationseinheit und eine Umsetzungseinheit von Sprache auf Daten. Als Datenkommunikationseinheit kann eine beliebige Einheit zur Verbindung mit einem IP-Netz dienen, beispielsweise einem WLAN-Modul, ein Bluetooth-Modul, oder ein Modul zum Aufbau einer Datenkommunikationsverbindung über ein Mobilfunknetz, beispielsweise nach dem UMTS- oder LTE-Standard. Als Umsetzungseinheit ist üblicherweise eine Voice-over-IP-Implementierung vorgesehen, die beispielsweise als Applikation für die Exekution auf einer Hardware der Basiseinheit ausgeführt ist. Als Umsetzungseinheit ist auch eine Applikation zur Verbindung mit dem Telekommunikationsdienstleister Skype möglich.

Soweit die Telekommunikationsverbindung zum Austausch von Textnachrichten verwendet wird, kann die Umsetzungseinheit entfallen. Es kann lediglich eine Applikation in der Basiseinheit vorgesehen sein, um die Verbindung mit dem Telekommunikationsdienstleister für diese Textnachrichten aufzubauen.

In vorteilhafter Ausgestaltung der Erfindung ist die Basiseinheit ausgeführt, über die Datenkommunikationseinheit auf eine externe Speichereinheit für die Speicherung einer Kontaktliste mit wenigstens einem Kontakt, der wenigstens einen Kontaktparameter aufweist, zuzugreifen, und ausgeführt ist, die Telekommunikationsverbindung unter Verwendung der Kontaktparameter aufzubauen. Somit wird die Kontaktliste in der Basiseinheit von der externen Speichereinheit bereitgestellt, so dass die Kontaktliste nicht in der Basiseinheit das Vorhalten von Speicherplatz erfordert.

Bevorzugt ist vorgesehen, dass die Basiseinheit temporär Teile der Kontaktliste wie einen oder mehrere Kontakte oder einen oder mehrere Kontaktparameter speichert. Ein Zugriff auf Kontakte und ihre Kontaktparameter für den Aufbau der Telekommunikationsverbindung erfolgt bevorzugt über die Mobilteile. Alternativ und/oder zusätzlich kann vorgesehen sein, dass das Mobilteil eine Speichereinheit zur Speicherung einer Kopie der Kontaktliste oder eines Teils davon umfasst. Dies ermöglicht einen schnellen Zugriff auf die Kontaktparameter und einen entsprechend schnellen Aufbau der Telekommunikationsverbindung. Ebenfalls ist es möglich, dass das Mobilteil über die Basiseinheit unmittelbar auf die externe Speichereinheit und damit auf die dort gespeicherte Kontaktliste zugreift. Die Verwendung einer solchen externen Speichereinheit ermöglicht als sogenannter "Cloud"-Dienst, eine einheitliche Kontaktliste von verschiedenen Geräten aus einzulesen, zu erweitern und zu verwenden. Entsprechend muss die Kontaktliste nur einmal gepflegt werden.

Gemäß einer vorteilhaften Ausgestaltung der Erfindung umfasst die Basiseinheit eine Speichereinheit für die Speicherung einer Kontaktliste mit wenigstens einem Kontakt, der wenigstens einen Kontaktparameter aufweist, und ist ausgeführt, die Telekommunikationsverbindung unter Verwendung der Kontaktparameter aufzubauen. Die Kontaktliste wird somit zentral in der Basiseinheit gespeichert, so dass alle Mobilteile die Kontaktliste für den Aufbau der Telekommunikationsverbindung verwenden können. Ein einzelnes Pflegen der Kontaktlisten auf verschiedenen Mobilteilen entfällt. Bevorzugt ist vorgesehen, dass die Basiseinheit temporär Teile der Kontaktliste wie einen oder mehrere Kontakte oder einen oder mehrere Kontaktparameter speichert. Ein Zugriff auf Kontakte und ihre Kontaktparameter für den Aufbau der Telekommunikationsverbindung erfolgt bevorzugt über die Mobilteile. Alternativ und/oder zusätzlich kann vorgesehen sein, dass das Mobilteil eine Speichereinheit zur Speicherung einer Kopie der Kontaktliste oder eines Teils davon umfasst. Dies ermöglicht einen schnellen Zugriff auf die Kontakte und einen entsprechend schnellen Aufbau der Telekommunikationsverbindung. Ebenfalls ist es möglich, dass das Mobilteil unmittelbar auf die Speichereinheit der Basiseinheit und damit auf die Kontaktliste zugreift. Die Mobilteile können unmittelbar auf die Kontaktliste der Basiseinheit zugreifen, oder eine Kopie der Kontaktliste zur internen Verwendung abspeichern.

Gemäß einer vorteilhaften Ausgestaltung der Erfindung ist die Basiseinheit ausgeführt, durch die Auswahl eines Kontakts aus der Kontaktliste die Telekommunikationsverbindung unter automatischer Verwendung der Kontaktparameter des ausgewählten Kontakts aufzubauen. Bevorzugt wird der Kontakt über das Mobilteil ausgewählt, und die Auswahl des Kontakts wird an die Basiseinheit übertragen. Die Basiseinheit wählt dabei automatisch und selbständig geeignete Kontaktparameter des ausgewählten Kontakts aus, um über einen geeigneten Telekommunikationsanschluss und Telekommunikationsdienstleister die Telekommunikationsverbindung aufzubauen. Verschiedene Szenarien sind dabei möglich, die die Anwendung von Kosten- oder qualitätsorientierten Routing-Verfahren und den Aufbau einer Telekommunikationsverbindung über verschiedene Kontaktparameter beinhalten. Beim Aufbau der Telekommunikationsverbindung über verschiedene Kontaktparameter kann berücksichtigt werden, ob von einem Telekommunikationsdienstleister Präsenzinformationen zur Erreichbarkeit eines Teilnehmers vorliegen. Die Präsenzinformationen ermöglichen es, den Aufbau der Telekommunikationsverbindung derart zu steuern, dass die Telekommunikationsverbindung mit einer hohen Wahrscheinlichkeit vollständig aufgebaut wird. Auch können verschiedene Kontaktparameter sequentiell ausprobiert werden, bis ein erfolgreicher Verbindungsaufbau erfolgt ist.

In vorteilhafter Ausgestaltung der Erfindung umfasst die Basiseinheit eine Synchronisationseinheit für die Übertragung von Kontakten zwischen der Speichereinheit und einem Telefongerät. Ein Telefongerät kann ein beliebiges Gerät zum Aufbau einer Telekommunikationsverbindung sein, beispielsweise ein Mobiltelefon, ein Smartphone, oder auch ein PC mit einem Telekommunikationsanschluss zum Aufbau einer Telekommunikationsverbindung. Prinzipiell ist es jedoch nicht erforderlich, dass das Telefongerät den Aufbau einer Telekommunikationsverbindung durchführen kann, da lediglich das Vorhandensein wenigstens einem Kontakt in dem Telefongerät erforderlich ist. Die Synchronisationseinheit kann zur Verbindung mit dem Telefongerät über ein Kabel oder eine kabellose Verbindung ausgeführt sein. Als kabellose Verbindung ist insbesondere eine Bluetooth-Verbindung geeignet. Als Verbindung mit einem Kabel ist die Verwendung einer USB-Schnittstelle mit einem entsprechenden Kabel bevorzugt. Die Synchronisationseinheit kann ausgeführt sein, die Kontakte lediglich zu übertragen, das heißt eine Kopie anzufertigen, entweder aus der Speichereinheit in das Telefongerät oder umgekehrt, oder eine vollwertige Synchronisation der Kontakte durchzuführen, wobei Änderungen eines Kontakts auf dem Telefongerät automatisch auf den Kontakt in der Speichereinheit übertragen werden und umgekehrt. Die Speichereinheit kann eine Speichereinheit in der Basiseinheit oder eine externe Speichereinheit, auf die über die Datenkommunikationseinheit zugegriffen wird, sein. Ebenfalls kann die Synchronisationseinheit ausgeführt sein, die Speichereinheit der Basiseinheit mit einer externen Speichereinheit über eine Datenverbindung zu synchronisieren.

In vorteilhafter Ausgestaltung der Erfindung ist die Basiseinheit für die Verbindung einer Mehrzahl Mobilteile ausgeführt. Abhängig von der Art und der Anzahl vorhandener Telekommunikationsanschlüsse können somit mehrere Mobilteile zum Aufbau einer oder mehrerer Telekommunikationsverbindungen über die Basiseinheit parallel verwendet werden. Beispielsweise kann ein Mobilteil über das Festnetz eine Telekommunikationsverbindung zu einer entsprechenden Gegenstelle durchführen, während ein anderes Mobilteil den Aufbau über eine Voice-over-IP-Verbindung über eine IP-Verbindung zu einer entsprechenden Gegenstelle durchführt. Durch die gemeinsame Nutzung der Basiseinheit über mehrere Mobilteile ist eine effiziente und kostengünstige Ausgestaltung der Telefonanlage möglich, da aufwändige Funktionen nur einmal in der Basiseinheit implementiert werden müssen. Beispielsweise ist das Vorhalten einer Kontaktliste in der Basiseinheit oder über die Basiseinheit ausreichend, um diese für den Aufbau der Telekommunikationsverbindung über ein beliebiges Mobilteil zu nutzen.

In weiterer Ausgestaltung der Erfindung ist die Basiseinheit ausgeführt, Telekommunikationsverbindungen mehrerer Mobilteile zu managen. Entsprechend können Funktionen wie Weiterleitung, Konferenz oder Übergabe von verschiedenen Mobilteilen in Telekommunikationsverbindung parallel durchgeführt werden. Durch die Verwendung der bereits genannten Anzeigeeinheit als Touchscreen lässt sich ein einfaches Management durchführen, indem Mobilteile und verfügbare Managementfunktionen über die Anzeigevorrichtung angezeigt werden und über eine Fingerbedienung, beispielsweise durch das Ziehen von Kontakten oder angezeigten Mobilteilen, eine gewünschte Managementfunktion durchgeführt wird. Auch können über die Anzeigevorrichtung Informationen über Mobilteile, die für das Management verwendet werden können, bereitgestellt werden. Außerdem umfasst das Management der Telekommunikationsverbindung das Management von Telekommunikationsverbindungen zwischen einer Mehrzahl Mobilteilen und einer Mehrzahl Gegenstellen, die wie zuvor beschrieben extern bezogen auf die Telefonanlage sind. Bei einem Touchscreen können grafisch angezeigte Mobilteile in Bezug zu einander verschoben werden, um Managementfunktionen zu realisieren.

In vorteilhafter Ausgestaltung der Erfindung ist die Basiseinheit ausgeführt, eine Telekommunikationsverbindung zwischen einer Mehrzahl Mobilteile zu managen. Das Management der Telekommunikationsverbindung umfasst daher zusätzlich das Management von Telekommunikationsverbindungen zwischen einzelnen Mobilteilen über die Basiseinheit, inklusive des Aufbaus von einer Telekommunikationsverbindung. Das DECT-Modul bildet einen Telekommunikationsanschluss, und ein angerufenes Mobilteil eine interne Gegenstelle. Der Telekommunikationsdienstleister ist in dem Fall als intern anzusehen und nicht weiter von Belang. Bei einem Touchscreen können grafisch angezeigte Mobilteile verschoben werden, um eine Managementfunktion zu aktivieren. Beispielsweise kann eine Konferenz mit mehreren Mobilteilen gestartet werden, indem die Mobilteile aufeinander gezogen werden können.

In vorteilhafter Ausgestaltung der Erfindung ist die Basiseinheit kabellos mit einer Energieversorgungseinheit ausgeführt. Vorzugsweise ist die Energieversorgungseinheit eine Batterie oder ein Akku, insbesondere ein Lithium-Ionen-Akku. Dies ermöglicht einen einfachen Transport der Basiseinheit an einen beliebigen Ort innerhalb des Hauses oder der Wohnung und deren bequeme Verwendung. Insbesondere bei der Ausgestaltung der Basiseinheit mit einem Touchpad kann die Basiseinheit nach der Art eines WebPads oder eines Tablet-PC ausgeführt sein, die vielfältige Zusatzfunktionen basierend auf einer Netzverbindung oder in der Basiseinheit vorhandener Funktionalitäten, beispielsweise installierter Applikationen, bereitstellen. Diese Funktionen können auf einem üblichen Mobilteil aufgrund vorgegebener Größen, Gewichts- und Kostenvorgaben nicht zufriedenstellend bereitgestellt werden. Auch können die Funktionen während einer bestehenden Telekommunikationsverbindung parallel genutzt werden, ohne dass das Mobilteil vom Kopf weggenommen werden muss, was das Fortführen einer Kommunikation über die Telekommunikationsverbindung erschweren oder gar ausschließen würde.

In vorteilhafter Ausgestaltung der Erfindung umfasst die Basiseinheit eine Spracherkennungseinheit und ist ausgeführt, von dem Mobilteil empfangene Sprachbefehle an die Spracherkennungseinheit zu übertragen und das Management der Telekommunikationsverbindung über von der Spracherkennungseinheit erkannte Befehle durchzuführen. Um die Mobilteile einfach zu gestalten, erfolgt die Spracherkennung in der Basiseinheit, weshalb die Sprachbefehle als gesprochene Sprache von dem Mobilteil an die Basiseinheit übertragen werden. Die Erkennung der Sprachbefehle wird entsprechend in der Basiseinheit durchgeführt. Die Übertragung der Sprachbefehle von dem Mobilteil an die Basiseinheit erfolgt über eine Sprachverbindung zwischen dem Mobilteil und der Basiseinheit.

In vorteilhafter Ausgestaltung der Erfindung umfasst die Basiseinheit eine Basishardware und eine Basissoftware, wobei die Basissoftware ein Telefonbetriebssystem, insbesondere ein Android Betriebssystem, umfasst. Insbesondere im Bereich der Mobiltelefone hat das Android Betriebssystem in den letzten Jahren große Bedeutung gewonnen, da es eine einheitliche Schnittstellen bereitstellt und es ermöglicht, über einheitliche Applikationen bestimmte Funktionen auf Geräten verschiedener Hersteller nutzen zu können. Durch die Implementierung des Telefonbetriebssystems können viele Standardfunktionalitäten, die das Management der Telekommunikationsverbindung betreffen, auf einfache Weise in der Basiseinheit genutzt werden. Entsprechend ist eine einfache Verwendung der Basiseinheit als Internetzugangsgerät möglich. Auch kann das Mobilteil Funktionalitäten der Implementierung von Android in der Basiseinheit nutzen, ohne dass eine zeit- und kostenintensive Implementierung entsprechender Funktionalitäten in jedem Mobilteil erforderlich ist. Als offenes Betriebssystem erlaubt Android das Hinzufügen von Softwarekomponenten und eine einfache Anpassung an unterschiedliche Hardware-Plattformen, um als Zentrale ein oder mehrere Mobilteile zu verwalten und das Management der Telekommunikationsverbindungen für die Mobilteile durchzuführen. Bevorzugt ist das Telefonbetriebssystem ein Android-Betriebssystem in der Version 3.0 oder höher, das für die Verwendung von großen Displays optimiert ist.

In weiterer Ausgestaltung der Erfindung umfasst die Basissoftware Treiber für den Telekommunikationsanschluss und das DECT-Modul, eine Funktionseinheit für das Management des Mobilteils und eine Managementapplikation für die Steuerung der Funktionseinheit. Die Funktionseinheit und/oder die Managementapplikation können dabei eine Mehrzahl einzelner Applikationen umfassen. Die DECT-spezifische Funktionen lassen sich auf diese Weise in ein Gerät mit Android-Betriebssystem integrieren. Der Aufwand für das Hinzufügen der DECT-spezifischen Funktionen ist dabei aufgrund der Erweiterungsmöglichkeiten von Android-Betriebssystemen gering.

Nachfolgend wird die Erfindung unter Bezugnahme auf die anliegende Zeichnung anhand bevorzugter Ausführungsformen näher erläutert.

Es zeigen
- Fig. 1: eine schematische Ansicht einer Telefonanlage mit einer Basiseinheit gemäß einer ersten Ausführungsform der vorliegenden Erfindung in Verbindung mit einem IP-Zugangspunkt und einer DECT-Basis,
- Fig. 2: eine schematische Detailansicht der Basiseinheit aus Fig. 1,
- Fig. 3: die Telefonanlage der ersten Ausführungsform mit einer alternativen Verkabelung von DECT-Basis und IP-Zugangspunkt,
- Fig. 4: die Telefonanlage der ersten Ausführungsform mit einer weiteren alternativen Verkabelung von DECT-Basis und IP-Zugangspunkt,
- Fig. 5: die Telefonanlage der ersten Ausführungsform in Verbindung mit einem IP-Zugangspunkt,
- Fig. 6: Die Telefonanlage der ersten Ausführungsform in Verbindung mit einem integrierten Gerät zur gleichzeitigen Verbindung mit verschiedenen Telekommunikationsanschlüssen der Basiseinheit,
- Fig. 7: eine schematische Übersicht über eine graphische Benutzerschnittstelle der Basiseinheit der ersten Ausführungsform der Erfindung, und
- Fig. 8: eine schematische Darstellung einer Android-Implementierung in der Basisstation.

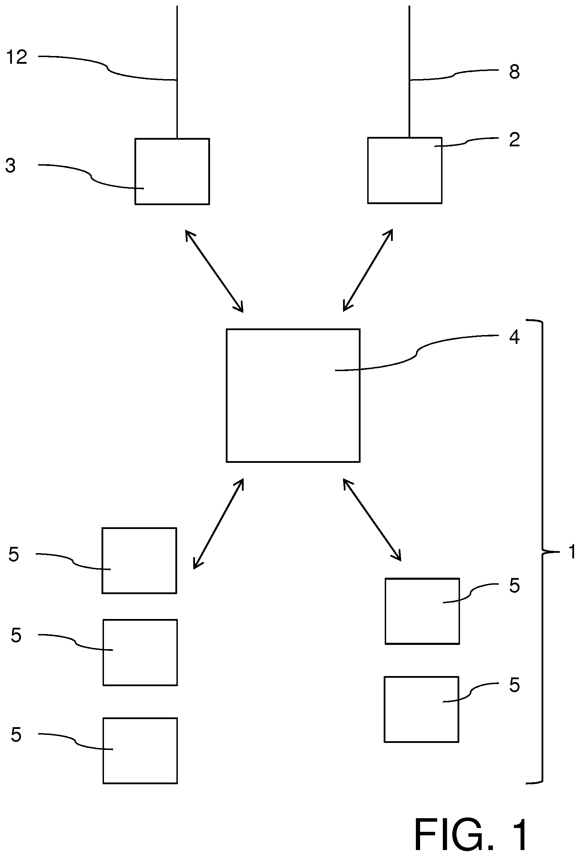

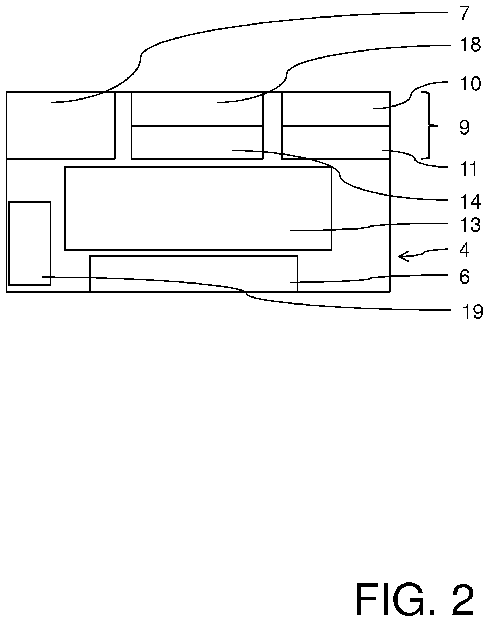

Figur 1 zeigt eine Telefonanlage 1 gemäß der vorliegenden Erfindung, die mit einer DECT-Basis 2 und einem IP-Zugangspunkt 3 verbunden ist. Die Telefonanlage 1 umfasst eine Basiseinheit 4, die im Detail in Figur 2 dargestellt ist, und eine Mehrzahl Mobilteile 5, die mit der Basiseinheit 4 schnurlos verbunden sind. Dazu umfasst die Basiseinheit 4 ein DECT-Modul 6, über welches die Mobilteile 5, die nach dem DECT-Standard ausgeführt sind, mit der Basiseinheit 4 verbunden sind.

Die Basiseinheit 4 umfasst weiterhin einen Telekommunikationsanschluss 7 nach dem DECT-Standard, über den die Basiseinheit 4 als Mobilteil an die DECT-Basis 2 anschließbar ist, die über eine Telefonverbindung 8 mit einem nicht gezeigten Festnetz verbunden ist

Weiterhin umfasst die Basiseinheit 4 einen Telekommunikationsanschluss 9 zur Verbindung über ein IP-Netz, der eine Datenkommunikationseinheit 10 und eine Umsetzungseinheit 11 umfasst. Die Datenkommunikationseinheit 10 ist in diesem Ausführungsbeispiel als WLAN-Modul zur Verbindung mit dem IP-Zugangspunkt 3 ausgeführt, der hier entsprechend als WLAN-Router ausgeführt und über eine Datenverbindung 12 mit dem hier nicht gezeigten Internet verbunden ist. In diesem Ausführungsbeispiel ist die Umsetzungseinheit 10 ist eine Skype-Applikation, die in der Basiseinheit 4 eine Umsetzung von Sprache auf die darunter liegende Datenverbindung 12 über die Datenkommunikationseinheit 10 durchführt. In einer alternativen Ausführungsform ist die Umsetzungseinheit 11 als Voice-over-IP-Anwendung zur Verbindung mit einem entsprechenden Telekommunikationsdienstleister ausgeführt ist.

Die Basiseinheit 4 umfasst weiterhin eine Anzeigeeinheit 13, die als Touchscreen ausgeführt ist, und eine graphische Benutzerschnittstelle der Basiseinheit 4 bildet.

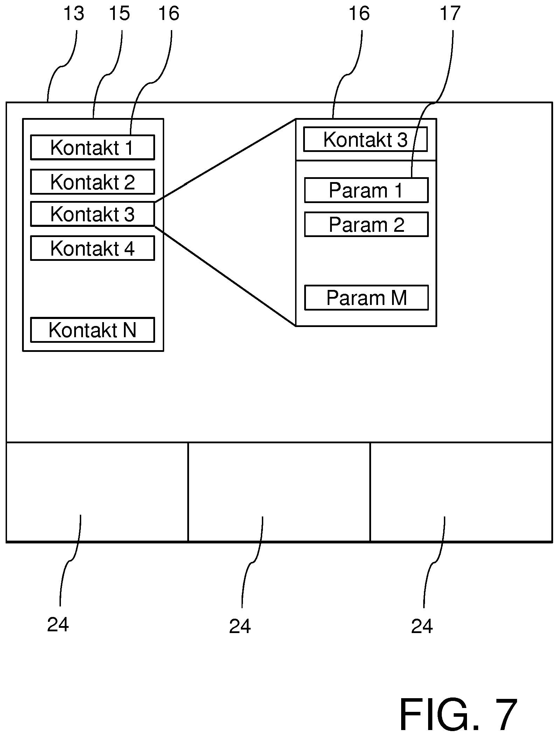

Ferner umfasst die Basiseinheit 4 eine Speichereinheit 14 für die Speicherung einer Kontaktliste 15 mit einer Mehrzahl Kontakte 16, wobei jedem Kontakt 16 wenigstens ein Kontaktparameter 17 für den Aufbau einer Telekommunikationsverbindung umfasst. Fig. 7 zeigt eine Darstellung der Kontaktliste 15 mit einer Mehrzahl Kontakten 16, wobei zu einem Kontakt 16 Kontaktparameter 17 in der Anzeigeeinheit 13 angezeigt werden.

Die Basiseinheit 4 umfasst eine Synchronisationseinheit 18 für die Übertragung von Kontakten 16 zwischen der Speichereinheit 14 und einem nicht gezeigten Telefongerät. Die Synchronisationseinheit 18 kann zur Verbindung mit dem Telefongerät, das beispielsweise ein Mobiltelefon oder ein Smartphone sein kann, über ein USB-Kabel oder eine kabellose Bluetooth-Verbindung ausgeführt sein. Die Synchronisationseinheit 18 ist ausgeführt eine vollwertige Synchronisation der Kontakte 16 durchzuführen, bei der Änderungen eines Kontakts 16 auf dem Telefongerät automatisch auf den Kontakt 16 in der Speichereinheit 14 übertragen werden und umgekehrt.

Ferner umfasst die Basiseinheit 4 eine Energieversorgungseinheit 19, die einen autarken Betrieb der Basiseinheit 4 ermöglicht. In diesem Ausführungsbeispiel ist die Energieversorgungseinheit 19 ein wiederaufladbarer Akku.

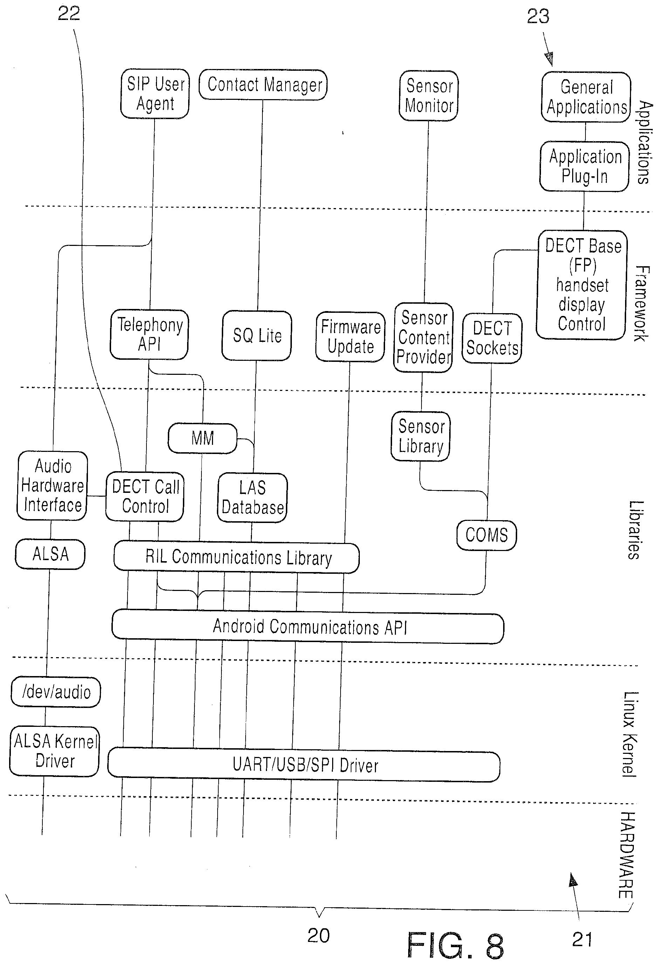

Insgesamt ist die Basiseinheit 4 somit als schnurloses Gerät ausgeführt, vorzugsweise nach der Art eines WebPads oder eines Tablet-PC. Die Basiseinheit 4 umfasst des Weiteren eine nicht gezeigte Basishardware und eine Basissoftware 20, die in Fig. 8 dargestellt ist. Die Basissoftware 23 ist in diesem Ausführungsbeispiel ein Android Betriebssystem in der Version 3.0. Die Basissoftware 20 umfasst nicht einzeln dargestellte Treiber in einer Treiberschicht 21, um die Telekommunikationsanschlüsse 7,9 und das DECT-Modul 6 anzubinden. Weiterhin umfasst die Basissoftware 20 eine Funktionseinheit 22 für das Management der Mobilteile 5 und eine Managementapplikation 23 für die Steuerung der Funktionseinheit 22. Die Managementapplikation 23 in diesem Ausführungsbeispiel umfasst eine Mehrzahl Einzelapplikationen, die unter der Managementapplikation 23 zusammengefasst sind.

Die Basiseinheit 4 dieser Ausführungsform ist ausgeführt, über die Anzeigeeinheit 13 ein Management von Telekommunikationsverbindungen durchzuführen. Dies umfasst das Management von Telekommunikationsverbindungen zwischen den Mobilteilen 5 als Gegenstellen, beispielsweise zur Herstellung einer Konferenz zwischen drei Mobilteilen 5, wie beispielhaft unter Bezug auf Fig. 7 erläutert wird. Wie in Figur 7 schematisch dargestellt ist, zeigt die Anzeigeeinheit 11 drei Symbole 24, die jeweils ein mit der Basiseinheit 4 verbundenes Mobilteil 5 repräsentieren. Zum Aufbau einer Telekommunikationsverbindung von einem Ersten zu einem Zweiten der Mobilteile 5 wird zunächst das entsprechende Symbol 24 des ersten Mobilteils 5 auf das Symbol 24 des zweiten Mobilteils 5 gezogen, woraufhin der Aufbau der Telekommunikationsverbindung zwischen den beiden Mobilteilen 5 durchgeführt wird. Zum Starten der Konferenz wird das entsprechende Symbol 24 des Dritten der Mobilteile 5 zusätzlich auf das Symbol 24 des zweiten Mobilteils 5 gezogen, woraufhin das dritte Mobilteil 5 zu der bestehenden Telekommunikationsverbindung zwischen dem ersten und dem zweiten Mobilteil 5 hinzugefügt wird, um die Konferenz zu starten.

Das Management von Telekommunikationsverbindungen umfasst das Management von Telekommunikationsverbindungen zwischen einem Mobilteil 5 und einer Mehrzahl Gegenstellen, die über einem Telekommunikationsanschluss verbindbar sind. Zum Aufbau einer Telekommunikationsverbindung mit der ersten Gegenstelle wird aus der Kontaktliste 15 ein Kontakt 16 ausgewählt, woraufhin der Kontakt 16 im Detail mit den Kontaktparametern 17 dargestellt wird, was in Fig. 7 gezeigt ist. Durch Ziehen eines gewünschten Kontaktparameters 17 auf das Symbol 24 eines entsprechenden Mobilteils 5 wird die Telekommunikationsverbindung zu der Gegenstelle aufgebaut. Dabei wird automatisch der passende Telekommunikationsanschluss 7, 8 ausgewählt, um über einen entsprechenden Telekommunikationsdienstleister den Aufbau der Telekommunikationsverbindung mit den ausgewählten Kontaktparametern 17 durchzuführen. Wenn es sich bei dem Kontaktparameter 17 beispielsweise um eine Festnetznummer handelt, wird die Telekommunikationsverbindung mit dem Telekommunikationsanschluss 7 nach dem DECT-Standard über die Festnetzverbindung des entsprechenden Telekommunikationsdienstleisters durchgeführt. Wenn es sich bei dem Kontaktparameter 17 um eine Voice-over-IP-Kennung eines Voice-over-IP-Telekommunikationsdienstleisters handelt, wird die Telekommunikationsverbindung entsprechend über die Umsetzungseinheit 11 und die Datenkommunikationseinheit 10 unter Verwendung der Nutzerkennung durchgeführt.

Alternativ erfolgt der Aufbau der Telekommunikationsverbindung dadurch, dass der gewünschte Kontakt 16 unmittelbar auf das Symbol 24 des Mobilteils 5 gezogen wird. Die Basiseinheit 4 wählt automatisch eine passende Kombination aus Telekommunikationsanschluss 7, 9, Telekommunikationsdienstleister und Kontaktparameter 17 für den Aufbau der Telekommunikationsverbindung aus.

Der Aufbau der Telekommunikationsverbindung wird in einer alternativen Ausführungsform von einem Mobilteil 5 auf im Wesentlichen die gleiche Weise wie zuvor beschrieben durchgeführt werden, beispielsweise durch die unmittelbare Eingabe einer Telefonnummer oder die Auswahl eines Kontaktes über das Mobilteil 5.

Zum Aufbau einer Konferenzschaltung mit einem weiteren Gegenstelle wird nach erfolgtem Verbindungsaufbau zu der ersten Gegenstelle ein weitere Kontakt 16 aus der Kontaktliste 15 ausgewählt, und ein gewünschter Kontaktparameter 17 auf das Symbol 24 des Mobilteils 5, das sich in der Telekommunikationsverbindung befindet, gezogen. Dadurch wird automatisch von der Basiseinheit 4 eine Telekommunikationsverbindung zu der zweiten Gegenstelle wie zuvor unter Bezug auf den Aufbau der Telekommunikationsverbindung zu der ersten Gegenstelle beschrieben aufgebaut und die Konferenz gestartet.

Zum Aufbau einer Konferenzschaltung mit einem weiteren Mobilteil 5 wird nunmehr das Symbol 24 des weiteren Mobilteils 5 auf das Symbol 24 des Mobilteils 5, das sich in der Konferenz befindet, gezogen. Dadurch wird automatisch von der Basiseinheit 4 eine Telekommunikationsverbindung zu dem Mobilteil 5 aufgebaut und die Konferenz erweitert.

In einer alternativen Ausführungsform umfasst die Basiseinheit 4 eine Spracherkennungseinheit und ist ausgeführt, von dem Mobilteil empfangene Sprachbefehle an die Spracherkennungseinheit zu übertragen und das Management der Telekommunikationsverbindung über von der Spracherkennungseinheit erkannte Befehle durchzuführen.

In einer alternativen Ausführungsform umfasst die Basiseinheit 4 eine Spracherkennungseinheit und ist ausgeführt, von dem Mobilteil empfangene Sprachbefehle an die Spracherkennungseinheit zu übertragen und das Management der Telekommunikationsverbindung über von der Spracherkennungseinheit erkannte Befehle durchzuführen.

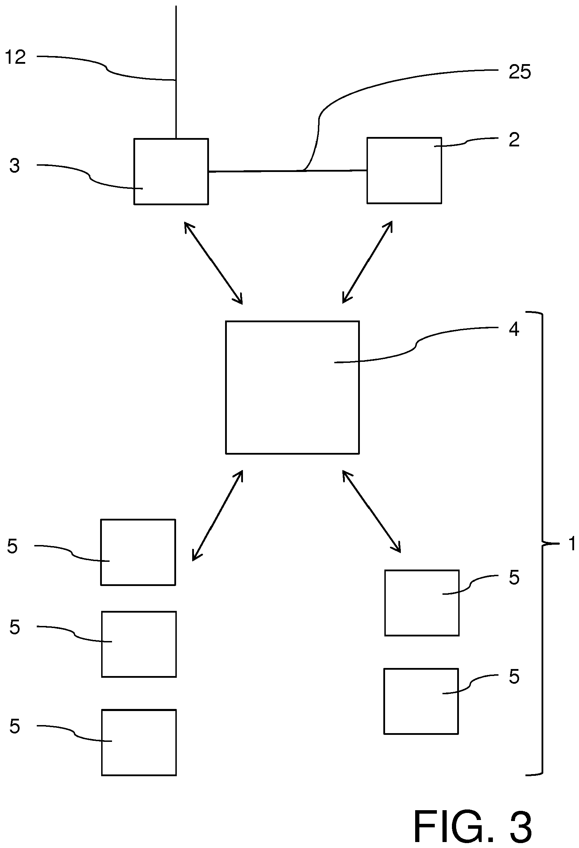

Die Figuren 3 bis 6 zeigen alternative Verbindungsmöglichkeiten der Telefonanlage 1. Die Telefonanlage 1 ist jeweils identisch zu der zuvor beschriebenen ausgeführt, allerdings können sich durch die unterschiedlichen vorhandenen Anschlussmöglichkeiten Unterschiede für den Aufbau der Kommunikationsverbindung ergeben.

Gemäß dem Verbindungsbeispiel aus Figur 3 ist die DECT-Basis 2 über eine Telekommunikationsverbindung 25 mit dem WLAN-Router 3 verbunden. Der WLAN-Router 3 führt eine Umsetzung durch, um die Telekommunikationsverbindung über die Datenverbindung 12 als Voice-over-IP-Verbindung weiter zu vermitteln. Die Basiseinheit 4 kann ihre beiden Telekommunikationsanschlüsse 7, 9 wie zuvor beschrieben nutzen.

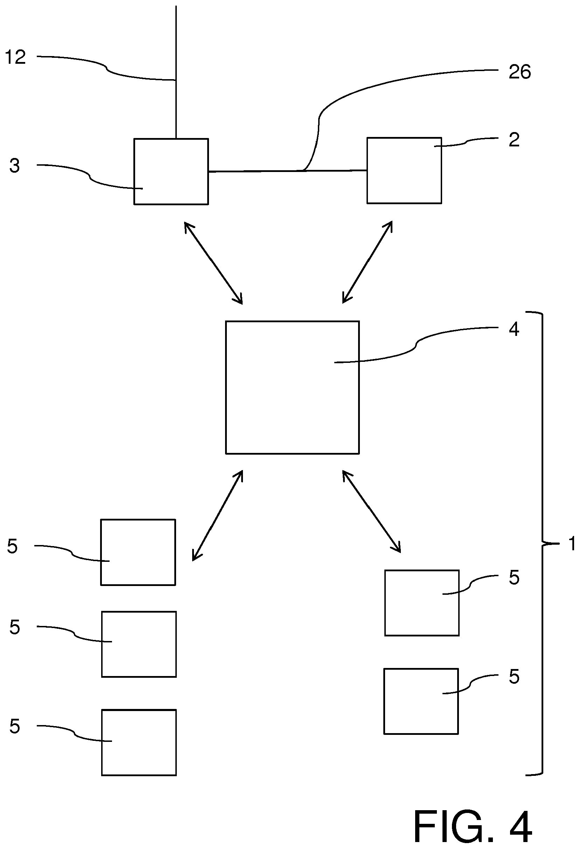

Gemäß dem Verbindungsbeispiel in Figur 4 ist die DECT-Basis 2 mit dem WLAN-Router 3 über eine Netzwerkverbindung 26 verbunden. Entsprechend führt die DECT-Basis 2 eine Umsetzung der Sprachverbindung auf eine Voice-over-IP-Verbindung durch, die über den WLAN-Router 3 weiter vermittelt wird. Die Basiseinheit 4 kann ihre beiden Telekommunikationsanschlüsse 7, 9 ebenfalls wie zuvor beschrieben nutzen.

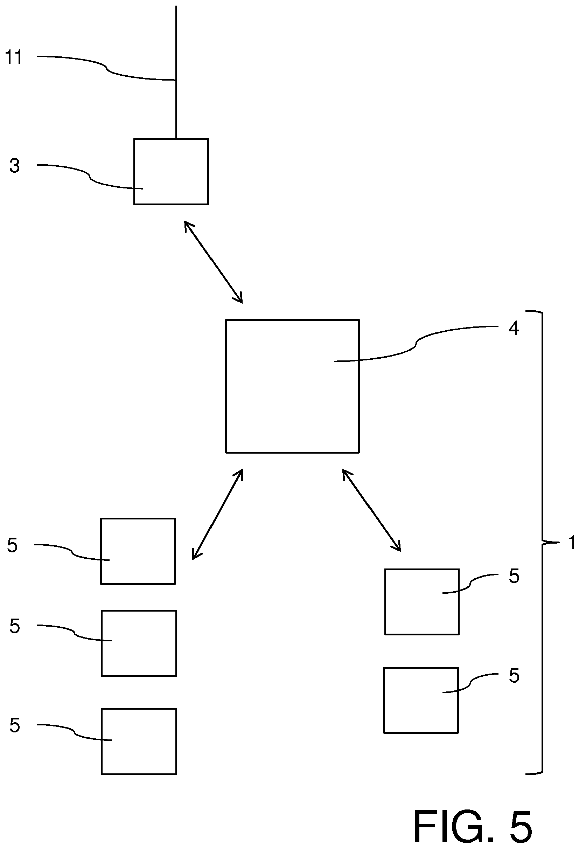

Gemäß dem Verbindungsbeispiel in Figur 5 ist die Basiseinheit 4 der Telefonanlage 1 ausschließlich mit dem WLAN-Router 3 verbunden. Entsprechend können von der Basiseinheit 4 ausschließlich Telekommunikationsverbindungen über den Telekommunikationsanschluss 9 mit der Datenkommunikationseinheit 10 und der Umsetzungseinheit 11 aufgebaut werden. Die Basiseinheit 4 wird somit ausschließlich Kontaktparameter 17 für den Aufbau von Telekommunikationsverbindungen verwenden, die über den Telekommunikationsanschluss 9 über ein IP-Netz verwendet werden können.

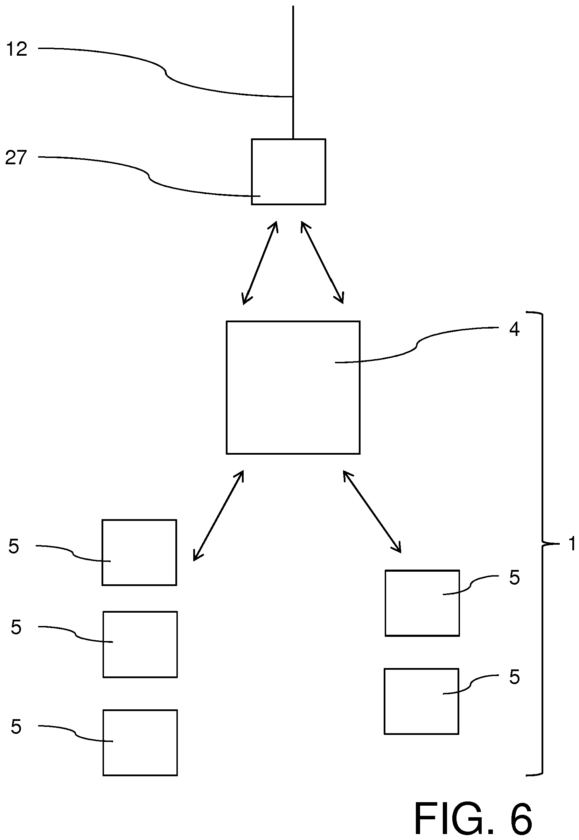

Gemäß dem Verbindungsbeispiel aus Figur 6 ist die Basiseinheit 4 der Telefonanlage 1 mit einem integrierten Gerät 27 verbunden, das sowohl die Funktion einer DECT-Basis 2 wie auch eines WLAN-Routers 3 übernimmt. Von dem integrierten Gerät 27 werden die Telekommunikationsverbindungen über die Datenverbindung 12 weiter vermittelt, weshalb Verbindungen über die DECT-Basis 2 auf eine Voice-over-IP-Verbindung umgesetzt werden. Die Basiseinheit 4 kann ihre beiden Telekommunikationsanschlüsse 7, 9 ebenfalls wie eingangs beschrieben nutzen.

**Bezugszeichenliste**

| | |
|---|---|
| Telefonanlage | 1 |
| DECT-Basis | 2 |
| IP-Zugangspunkt, WLAN-Router | 3 |
| Basiseinheit | 4 |
| Mobilteil | 5 |
| DECT-Modul | 6 |
| Telekommunikationsanschluss nach dem DECT-Standard | 7 |
| Telefonverbindung | 8 |
| Telekommunikationsanschluss über IP-Netz | 9 |
| Datenkommunikationseinheit, WLAN-Modul | 10 |
| Umsetzungseinheit | 11 |
| Datenverbindung | 12 |
| Anzeigeeinheit | 13 |
| Speichereinheit | 14 |
| Kontaktliste | 15 |
| Kontakt | 16 |
| Kontaktparameter | 17 |
| Synchronisationseinheit | 18 |
| Energieversorgungseinheit | 19 |
| Basissoftware | 20 |
| Treiberschicht | 21 |
| Funktionseinheit | 22 |
| Managementapplikation | 23 |
| Symbol | 24 |
| Telekommunikationsverbindung | 25 |
| Netzwerkverbindung | 26 |
| Integriertes Gerät | 27 |

## Patentansprüche

1. Basiseinheit (4) mit einem DECT-Modul (6) für die Verbindung wenigstens eines Mobilteils (5) nach dem DECT-Standard, wobei die Basiseinheit (4) umfasst:
einen Telekommunikationsanschluss (9) zur Verbindung mit einem Telekommunikationsdienstleister, um eine Telekommunikationsverbindung zwischen dem Mobilteil (5) und einer Gegenstelle aufzubauen, und
einen Telekommunikationsanschluss (7) nach dem DECT-Standard zum Anschluss an eine DECT-Basis (2) als Mobilteil,
**dadurch gekennzeichnet, dass**
die Basiseinheit (4) eine Benutzerschnittstelle (13) umfasst, die ein Management der Telekommunikationsverbindung in einem Zustand ermöglicht, in dem die Basiseinheit (4) an die DECT-Basis (2) als Mobilteil angeschlossen ist,
wobei das Management der Telekommunikationsverbindung umfasst: einen Aufbau der Telekommunikationsverbindung, einen Aufbau einer Konferenz mit mehreren Teilnehmern und eine Übergabe einer bestehenden Telekommunikationsverbindung an eine andere Gegenstelle.

2. Basiseinheit (4) nach Anspruch 1, **dadurch gekennzeichnet, dass**
die Benutzerschnittstelle (13) als grafische Benutzerschnittstelle mit einer Anzeigeeinheit ausgeführt ist, wobei die Anzeigeeinheit als Touchscreen ausgeführt ist.

3. Basiseinheit (4) nach einem der vorhergehenden Ansprüche, **dadurch gekennzeichnet, dass**
der Telekommunikationsanschluss (9) eine Datenkommunikationseinheit (10) und eine Umsetzungseinheit (11) von Sprache auf Daten umfasst.

4. Basiseinheit (4) nach Anspruch 3, **dadurch gekennzeichnet, dass**
die Basiseinheit (4) ausgeführt ist, über die Datenkommunikationseinheit (10) auf eine externe Speichereinheit für die Speicherung einer Kontaktliste (15) mit wenigstens einem Kontakt (16), der wenigstens einen Kontaktparameter (17) aufweist, zuzugreifen, und ausgeführt ist, die Telekommunikationsverbindung unter Verwendung der Kontaktparameter (17) aufzubauen.

5. Basiseinheit (4) nach einem der vorhergehenden Ansprüche, **dadurch gekennzeichnet, dass**
die Basiseinheit (4) eine Speichereinheit (14) für die Speicherung einer Kontaktliste (15) mit wenigstens einem Kontakt (16), der wenigstens einen Kontaktparameter (17) aufweist, umfasst und ausgeführt ist, die Telekommunikationsverbindung unter Verwendung der Kontaktparameter (17) aufzubauen.

6. Basiseinheit (4) nach einem der Ansprüche 4 oder 5, **dadurch gekennzeichnet, dass**
die Basiseinheit (4) ausgeführt ist, durch die Auswahl eines Kontakts (16) aus der Kontaktliste (15) die Telekommunikationsverbindung unter automatischer Verwendung der Kontaktparameter (17) des ausgewählten Kontakts (17) aufzubauen.

7. Basiseinheit (4) nach einem der Ansprüche 4 bis 6, **dadurch gekennzeichnet, dass**
die Basiseinheit (4) eine Synchronisationseinheit (18) für die Übertragung von Kontakten (16) zwischen der Speichereinheit (14) und einem Telefongerät umfasst.

8. Basiseinheit (4) nach einem der vorhergehenden Ansprüche, **dadurch gekennzeichnet, dass**
die Basiseinheit (4) für die Verbindung einer Mehrzahl Mobilteile (5) ausgeführt ist.

9. Basiseinheit (4) nach Anspruch 8, **dadurch gekennzeichnet, dass**
die Basiseinheit (4) ausgeführt ist, Telekommunikationsverbindungen mehrerer Mobilteile (5) zu managen.

10. Basiseinheit (4) nach einem der vorhergehenden Ansprüche, **dadurch gekennzeichnet, dass**
die Basiseinheit (4) ausgeführt ist, eine Telekommunikationsverbindung zwischen einer Mehrzahl Mobilteile (5) zu managen.

11. Basiseinheit (4) nach einem der vorhergehenden Ansprüche, **dadurch gekennzeichnet, dass**
die Basiseinheit (4) kabellos ausgeführt ist und eine Energieversorgungseinheit (19) aufweist.

12. Basiseinheit (4) nach einem der vorhergehenden Ansprüche, **dadurch gekennzeichnet, dass**
die Basiseinheit (4) eine Spracherkennungseinheit umfasst und ausgeführt ist, von dem Mobilteil (5) empfangene Sprachbefehle an die Spracherkennungseinheit zu übertragen und das Management der Telekommunikationsverbindung über von der Spracherkennungseinheit erkannte Befehle durchzuführen.

13. Basiseinheit (4) nach einem der vorhergehenden Ansprüche, **dadurch gekennzeichnet, dass**
die Basiseinheit (4) eine Basishardware und eine Basissoftware (20) umfasst, wobei die Basissoftware (20) ein Telefonbetriebssystem umfasst.

14. Basiseinheit (4) nach Anspruch 15, **dadurch gekennzeichnet, dass**
die Basissoftware (20) Treiber für den Telekommunikationsanschluss (7, 9) und das DECT-Modul (6), eine Funktionseinheit (22) für das Management des Mobilteils (5) und eine Management-Applikation (23) für die Steuerung der Funktionseinheit (22) umfasst.

15. Telefonanlage (1) mit einer Basiseinheit (4) und wenigstens einem Mobilteil (5) nach dem DECT-Standard, **dadurch gekennzeichnet, dass**
die Basiseinheit (4) gemäß einem der Ansprüche 1 bis 14 ausgeführt ist.

## Claims

1. A base unit (4) with a DECT module (6) for the connection of at least one mobile part (5) according to the DECT standard, wherein the base unit (4) comprises:
a telecommunication connection (9) for connection to a telecommunication service provider in order to establish a telecommunication link between the mobile part (5) and a remote terminal, and
a telecommunication connection (7) according to the DECT standard for connection to a DECT base (2) as mobile part,
**characterised in that**
the base unit (4) comprises a user interface (13), which enables management of the telecommunication link in a state in which the base unit (4) is connected to the DECT base (2) as mobile part,
wherein the management of the telecommunication link comprises: establishment of the telecommunication link, establishment of a conference with multiple subscribers, and transfer of an existing telecommunication link to another remote station.

2. The base unit (4) according to claim 1, **characterised in that**
the user interface (13) is configured as a graphical user interface with a display unit, wherein the display unit is configured as a touchscreen.

3. The base unit (4) according to either one of the preceding claims, **characterised in that**
the telecommunication connection (9) comprises a data communication unit (10) and a conversion unit (11) for converting speech to data.

4. The base unit (4) according to claim 3, **characterised in that**
the base unit (4) is configured to access, via the data communication unit (10), an external memory unit for storing a contact list (15) comprising at least one contact (16) which comprises at least one contact parameter (17), and is configured to establish the telecommunication link with use of the contact parameter (17) .

5. The base unit (4) according to any one of the preceding claims, **characterised in that**
the base unit (4) comprises a memory unit (14) for storing a contact list (15) containing at least one contact (16) which comprises at least one contact parameter (17), and is configured to establish the telecommunication link with use of the contact parameter (17) .

6. The base unit (4) according to either one of claims 4 or 5, **characterised in that**
the base unit (4), by selection of a contact (16) from the contact list (15), is configured to establish the telecommunication link with automatic use of the contact parameter(s) (17) of the selected contact (17).

7. The base unit (4) according to any one of claims 4 to 6, **characterised in that**
the base unit (4) comprises a synchronisation unit (18) for transmitting contacts (16) between the memory unit (14) and a telephone.

8. The base unit (4) according to any one of the preceding claims, **characterised in that**
the base unit (4) is configured for the connection of multiple mobile parts (5).

9. The base unit (4) according to claim 8, **characterised in that**
the base unit (4) is configured to manage telecommunication links of multiple mobile parts (5).

10. The base unit (4) according to any one of the preceding claims, **characterised in that**
the base unit (4) is configured to manage a telecommunication link between multiple mobile parts (5).

11. The base unit (4) according to any one of the preceding claims, **characterised in that**
the base unit (4) is wireless and has an energy supply unit (19).

12. The base unit (4) according to any one of the preceding claims, **characterised in that**
the base unit (4) comprises a voice recognition unit and is configured to transmit voice commands received from the mobile part (5) to the voice recognition unit and to perform the management of the telecommunication link via commands recognised by the voice recognition unit.

13. The base unit (4) according to any one of the preceding claims, **characterised in that**
the base unit (4) comprises a base hardware and a base software (20), wherein the base software (20) comprises a telephone operating system.

14. The base unit (4) according to claim 15, **characterised in that**
the base software (20) comprises drivers for the telecommunication connection (7, 9) and the DECT module (6), a functional unit (22) for the management of the mobile part (5), and a management application (23) for the control of the functional unit (22).

15. A telephone system (1) comprising a base unit (4) and at least one mobile part (5) according to the DECT standard, **characterised in that**
the base unit (4) is configured according to any one of claims 1 to 14.

## Revendications

1. Unité de base (4) dotée d'un module DECT (6) pour la liaison d'au moins une partie mobile (5) selon la norme DECT, où l'unité de base (4) comprend :
une connexion de télécommunication (9) pour la liaison avec un prestataire de services de télécommunications afin d'établir une liaison de télécommunication entre la partie mobile (5) et une partie correspondante, et
une connexion de télécommunication (7) selon la norme DECT pour la connexion à une base DECT (2) servant de partie mobile,
**caractérisée en ce que**
l'unité de base (4) comprend une interface d'utilisateur (13) qui permet une gestion de la liaison de télécommunication dans un état dans lequel l'unité de base (4) est raccordée à la base DECT (2) en tant que partie mobile,
où la gestion de la liaison de télécommunication comprend : un établissement de la liaison de télécommunication, un établissement d'une conférence avec plusieurs participants et un transfert d'une liaison de télécommunication existante à un autre partie correspondante.

2. Unité de base (4) selon la revendication 1, **caractérisé en ce que**
l'interface d'utilisateur (13) est conçue sous forme d'une interface d'utilisateur graphique avec une unité d'affichage, où l'unité d'affichage est conçue sous forme d'écran tactile.

3. Unité de base (4) selon l'une des revendications précédentes, **caractérisée en ce que**
la connexion de télécommunication (9) comprend une unité de communication de données (10) et une unité de conversion (11) du langage parlé vers des données.

4. Unité de base ((4) selon la revendication 3, **caractérisée en ce que**
l'unité de base (4) est conçue pour accéder,
par l'intermédiaire de l'unité de communication de données (10), à une unité de mémoire externe pour le stockage d'une liste de contacts (15), avec au moins un contact (16) qui présente au moins un paramètre de contact (17), et est conçue pour établir la liaison de télécommunication moyennant l'utilisation des paramètres de contact (17).

5. Unité de base (4) selon l'une des revendications précédentes, **caractérisée en ce que**
l'unité de base (4) comprend une unité de mémoire (14) pour le stockage d'une liste de contacts (15) avec au moins un contact (16) qui présente au moins un paramètre de contact (17), et est conçue pour
établir la liaison de télécommunication moyennant l'emploi des paramètres de contact (17).

6. Unité de base (4) selon l'une des revendications 4 ou 5, **caractérisée en ce que**
l'unité de base (4) est conçue établir, par la sélection d'un contact (16) à partir de la liste des contacts (15), la liaison de télécommunication moyennant l'emploi automatique des paramètres de contact (17) du contact (17) sélectionné.

7. Unité de base (4) selon l'une des revendications 4 à 6, **caractérisée en ce que**
l'unité de base (4) comprend une unité de synchronisation (18) pour le transfert de contacts (16) entre l'unité de mémoire (14) et un appareil téléphonique.

8. Unité de base (4) selon l'une des revendications précédentes, **caractérisée en ce que**
l'unité de base (4) est conçue pour la liaison d'un grand nombre de parties mobiles (5).

9. Unité de base (4) selon la revendication 8, **caractérisée en ce que**
l'unité de base (4) est conçue pour gérer des liaisons de télécommunication de plusieurs parties mobiles (5).

10. Unité de base (4) selon l'une des revendications précédentes, **caractérisée en ce que**
l'unité de base (4) est conçue pour gérer une liaison de télécommunication entre une multiplicité de parties mobiles (5).

11. Unité de base (4) selon l'une des revendications précédentes, **caractérisée en ce que**
l'unité de base (4) est conçue sans fil et présente une unité d'alimentation en énergie (19).

12. Unité de base (4) selon l'une des revendications précédentes, **caractérisée en ce que**
l'unité de base (4) comprend une unité de reconnaissance vocale et est conçue pour transmettre des ordres d'appels reçus par la partie mobile (5) à l'unité de reconnaissance vocale et effectuer la gestion de la liaison de télécommunication par le biais des ordres reconnus par l'unité de reconnaissance vocale.

13. Unité de base (4) selon l'une des revendications précédentes, **caractérisée en ce que**
l'unité de base (4) comprend un matériel de base et des logiciels de base (20), où les logiciels de base (20) comprennent un système d'exploitation de téléphonie.

14. Unité de base (4) selon la revendication 15, **caractérisée en ce que**
l'unité de base (4) comprend des pilotes pour la connexion de télécommunication (7, 9) et le module DECT (6), une unité fonctionnelle (22) pour la gestion de la partie mobile (5) et une application de gestion (23) pour la commande de l'unité fonctionnelle (22).

15. Installation téléphonique (1) dotée d'une unité de base (4) et d'au moins une partie mobile (5) selon la norme DECT, **caractérisée en ce que**
l'unité de base (4) est conçue selon l'une des revendications 1 à 14.
